# EUROPÄISCHE PATENTANMELDUNG

(11) **EP 3 871 484 A1**
(43) Veröffentlichungstag der Anmeldung: **01.09.2021**
(21) Anmeldenummer: 21154893.8
(22) Anmeldetag: 03.02.2021
(51) Int. Cl.: A01D 34/00, G05D 1/00

(54) **ARBEITSROBOTERSYSTEM UND VERFAHREN ZU EINEM EINRICHTEN DES ARBEITSROBOTERSYSTEMS**

(30) Priorität: 27.02.2020 DE 102020202522
(71) Anmelder: Robert Bosch GmbH, 70442 Stuttgart (DE)
(72) Erfinder: Coote, Chris, Colchester,Essex, CO4 5ZQ (GB); Johnson, William, Ipswich Suffolk, IP6 8JJ (GB); Abbott, Paul, Swaffham Prior, CB25 0JZ (GB)

(57) **Zusammenfassung**

Arbeitsrobotersystem, insbesondere Mährobotersystem, mit zumindest einer mobilen Arbeitsrobotervorrichtung (16a; 16b), insbesondere einem Mähroboter, zu einer Bearbeitung eines Arbeitsbereichs (18a; 18b), und mit zumindest einer Basisstation (14a; 14b) zu einem Laden der Arbeitsrobotervorrichtung (16a; 16b), wobei die Arbeitsrobotervorrichtung (16a; 16b) und/oder die Basisstation (14a; 14b) zumindest eine Interfaceeinheit (22a; 22b) umfassen/umfasst, wobei insbesondere die Basisstation (14a; 14b) und ein Perimeterkabel (12a; 12b) des Arbeitsrobotersystems (10a; 10b) dazu vorgesehen sind, den Arbeitsbereich (18a; 18b) zu begrenzen und wobei insbesondere das Perimeterkabel (12a; 12b) dazu vorgesehen ist, insbesondere unabhängig von einer Anordnung des Perimeterkabels (12a; 12b) und/oder des Arbeitsbereichs (18a; 18b) relativ zur Basisstation (14a; 14b), zumindest elektrisch mit der Basisstation (14a; 14b) verbunden zu werden.

Es wird vorgeschlagen, dass das Arbeitsrobotersystem zumindest eine Steuer- und/oder Regeleinheit (26a; 26b) umfasst, welche dazu eingerichtet ist, in zumindest einem Betriebszustand, insbesondere bei einer Inbetriebnahme der Arbeitsrobotervorrichtung (16a; 16b), in Abhängigkeit von zumindest einer mittels einer Initialabfrage über die Interfaceeinheit (22a; 22b) erfassten Information eine Anordnung des Arbeitsbereichs (18a; 18b) relativ zu der Basisstation (14a; 14b) zu ermitteln.

## Beschreibung

### Stand der Technik

Es ist bereits ein Arbeitsrobotersystem mit zumindest einer mobilen Arbeitsrobotervorrichtung zu einer Bearbeitung eines Arbeitsbereichs, und mit zumindest einer Basisstation zu einem Laden der Arbeitsrobotervorrichtung, wobei die Arbeitsrobotervorrichtung und/oder die Basisstation zumindest eine Interfaceeinheit umfassen/umfasst, vorgeschlagen worden.

### Offenbarung der Erfindung

Die Erfindung geht aus von einem Arbeitsrobotersystem, insbesondere einem Mährobotersystem, mit zumindest einer mobilen Arbeitsrobotervorrichtung, insbesondere einem Mähroboter, zu einer Bearbeitung eines Arbeitsbereichs, und mit zumindest einer Basisstation zu einem Laden der Arbeitsrobotervorrichtung, wobei die Arbeitsrobotervorrichtung und/oder die Basisstation zumindest eine Interfaceeinheit umfassen/umfasst, wobei insbesondere die Basisstation und ein Perimeterkabel des Arbeitsrobotersystems dazu vorgesehen sind, den Arbeitsbereich zu begrenzen und wobei insbesondere das Perimeterkabel dazu vorgesehen ist, insbesondere unabhängig von einer Anordnung des Perimeterkabels und/oder des Arbeitsbereichs relativ zur Basisstation, zumindest elektrisch mit der Basisstation verbunden zu werden.

Es wird vorgeschlagen, dass das Arbeitsrobotersystem zumindest eine Steuer-und/oder Regeleinheit umfasst, welche dazu eingerichtet ist, in zumindest einem Betriebszustand, insbesondere bei einer Inbetriebnahme der Arbeitsrobotervorrichtung, in Abhängigkeit von zumindest einer mittels einer Initialabfrage über die Interfaceeinheit erfassten Information eine Anordnung des Arbeitsbereichs relativ zu der Basisstation zu ermitteln.

Unter "vorgesehen" soll insbesondere speziell ausgelegt und/oder speziell ausgestattet verstanden werden. Darunter, dass ein Objekt, insbesondere die Basisstation und/oder das Perimeterkabel, zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "eingerichtet" soll insbesondere speziell ausgelegt und/oder speziell programmiert verstanden werden. Darunter, dass ein Objekt, insbesondere die Steuer- und/oder Regeleinheit, zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt ist die Steuer-und/oder Regeleinheit als Teil der Basisstation und/oder als Teil der Arbeitsrobotervorrichtung ausgebildet.

Vorzugsweise ist die Interfaceeinheit als Teil der Arbeitsrobotervorrichtung und/oder als Teil der Basisstation ausgebildet. Bevorzugt ist die Interfaceeinheit dazu vorgesehen, die Initialabfrage an einen Benutzer und/oder eine externe Einheit auszugeben. Insbesondere ist die Interfaceeinheit dazu vorgesehen und/oder eingerichtet, die Initialabfrage mittels eines akustischen, optischen, haptischen, elektrischen und/oder elektronischen Signals auszugeben. Beispielsweise ist die Interfaceeinheit zu einer, insbesondere drahtlosen, Datenübertragung mit einer externen Einheit, wie insbesondere einem Smart-Home-System und/oder einem Smartphone, eingerichtet. Die mittels der Initialabfrage über die Interfaceeinheit erfasste Information ist vorzugsweise als ein Bedienbefehl und/oder ein Sprachbefehl ausgebildet, welche(r) über die Interfaceeinheit und/oder die Steuer- und/oder Regeleinheit in ein elektrisches und/oder elektronisches Signal umgewandelt wird.

Die mobile Arbeitsrobotervorrichtung ist vorzugsweise als eine angetriebene fahrbare Einheit ausgebildet, die insbesondere zumindest ein Arbeitswerkzeug, insbesondere ein Mähwerkzeug zu einem Schneiden von Pflanzen, insbesondere Gräsern, aufweist. Vorzugsweise umfasst die Arbeitsrobotervorrichtung zumindest einen Motor, insbesondere einen Elektromotor, und zumindest ein Fortbewegungselement, insbesondere ein Rad, eine Rolle und/oder eine Gleiskette, welches insbesondere über den Motor angetrieben ist. Bevorzugt ist die Steuer-und/oder Regeleinheit dazu vorgesehen, die Arbeitsrobotervorrichtung zu steuern, insbesondere zumindest eine Fortbewegungsstrecke der Arbeitsrobotervorrichtung einzustellen. Insbesondere weist die Steuer- und/oder Regeleinheit einen Algorithmus auf, der dazu vorgesehen ist, Steuerbefehle zu einem Steuern der Arbeitsrobotervorrichtung situationsspezifisch auszuwählen beziehungsweise anzupassen. Bevorzugt umfasst die Arbeitsrobotervorrichtung zumindest eine Sensoreinheit zu einer Umgebungserfassung. Vorzugsweise umfasst die Sensoreinheit zumindest ein Sensorelement, das dazu vorgesehen ist, ein magnetisches Feld zu erfassen. Es ist denkbar, dass die Sensoreinheit zumindest ein weiteres Sensorelement aufweist, welches beispielsweise als eine Kamera, als ein Positionsbestimmungssensor, beispielsweise ein GPS-Sensor, als ein Entfernungssensor o. dgl. ausgebildet ist. Bevorzugt umfasst das Arbeitsrobotersystem zumindest eine Kommunikationseinheit, die dazu vorgesehen und/oder eingerichtet ist, zumindest die Arbeitsrobotervorrichtung und die Basisstation übertragungstechnisch miteinander zu verbinden. Insbesondere ist die Kommunikationseinheit als Teil der Arbeitsrobotervorrichtung und als Teil der Basisstation ausgebildet. Vorzugsweise ist die Kommunikationseinheit zu einer drahtlosen Verbindung der Arbeitsrobotervorrichtung mit der Basisstation eingerichtet und/oder vorgesehen, beispielsweise via Funk, WLAN, Bluetooth, o. dgl.

Vorzugsweise ist das Perimeterkabel dazu vorgesehen, insbesondere bei einer Montage des Arbeitsrobotersystems, mit der Basisstation, insbesondere elektrisch, verbunden zu werden. Bevorzugt begrenzen die Basisstation und das Perimeterkabel den Arbeitsbereich zumindest im Wesentlichen vollständig. Insbesondere ist der Arbeitsbereich als eine Fläche und/oder ein Volumen innerhalb des Arbeitsrobotersystems ausgebildet. Es ist denkbar, dass der Arbeitsbereich Teil des Arbeitsrobotersystems ist. Vorzugsweise ist die Basisstation dazu vorgesehen und/oder eingerichtet, einen elektrischen Strom und/oder eine elektrische Spannung an dem Perimeterkabel anzulegen. Insbesondere ist das Perimeterkabel dazu vorgesehen, über einen elektrischen Strom ein magnetisches Feld innerhalb des Arbeitsbereichs zu erzeugen, wobei insbesondere eine Richtung von Feldlinien des magnetischen Felds innerhalb des Arbeitsbereichs von einer Stromrichtung durch das Perimeterkabel bestimmt wird. Bevorzugt weist die Basisstation zumindest zwei Verbindungsschnittstellen auf, die dazu vorgesehen sind, das Perimeterkabel zumindest elektrisch mit der Basisstation zu verbinden. Vorzugsweise ist die Richtung der Feldlinien des magnetischen Felds innerhalb des Arbeitsbereichs abhängig von einer Ausrichtung des Perimeterkabels relativ zur Basisstation und/oder den Verbindungsschnittstellen. Besonders bevorzugt ist die Arbeitsrobotervorrichtung, insbesondere die Sensoreinheit, dazu vorgesehen und/oder eingerichtet, über das Sensorelement das mittels des Perimeterkabels und der Basisstation generierte magnetische Feld zu erfassen und insbesondere eine Richtung der Feldlinien des magnetischen Felds zu erfassen und/oder zu bestimmen. Vorzugsweise umfasst die Basisstation zumindest eine Roboterschnittstelle, die zu einer Verbindung der Basisstation mit der Arbeitsrobotervorrichtung vorgesehen ist. Insbesondere ist die Basisstation dazu vorgesehen, die Arbeitsrobotervorrichtung in zumindest einem Betriebszustand mittels der Roboterschnittstelle aufzunehmen. Bevorzugt umfasst die Arbeitsrobotervorrichtung zumindest eine Energiespeichereinheit, die dazu vorgesehen und/oder eingerichtet ist, zumindest den Motor mit, insbesondere elektrischer, Energie zu versorgen. Insbesondere in einer Ausgestaltung des Motors als ein Elektromotor, ist die Energiespeichereinheit beispielsweise als ein elektrochemischer Akkumulator ausgebildet. Vorzugsweise ist die Basisstation dazu eingerichtet und/oder vorgesehen, die Energiespeichereinheit der Arbeitsrobotervorrichtung, insbesondere den Energiespeicher, über die Roboterschnittstelle aufzuladen. Insbesondere ist die Basisstation mit einem externen Energieversorgungsnetz verbunden. Vorzugsweise ist die Arbeitsrobotervorrichtung, insbesondere die Steuer-und/oder Regeleinheit, dazu eingerichtet und/oder vorgesehen, mittels der Richtung von Feldlinien des erfassten magnetischen Felds eine Anordnung der Arbeitsrobotervorrichtung, insbesondere der Sensoreinheit, relativ zu der Basisstation, insbesondere innerhalb des Arbeitsbereichs, zu ermitteln. Insbesondere ist die Arbeitsrobotervorrichtung dazu vorgesehen, zumindest eine Tätigkeit, beispielsweise ein Saugen, Mähen, Erfassen, Messen o. dgl., innerhalb des Arbeitsbereichs auszuführen, wobei sich insbesondere die Arbeitsrobotervorrichtung über und/oder durch den Arbeitsbereich bewegt. In einer bevorzugten Ausgestaltung ist der Arbeitsbereich als ein Rasen, eine Grünfläche und/oder ein Garten ausgebildet, wobei die Arbeitsrobotervorrichtung als Mährobotervorrichtung ausgebildet ist und dazu vorgesehen ist, Pflanzen innerhalb des Arbeitsbereichs zu bearbeiten, insbesondere zu schneiden, zu wässern und/oder zu düngen. Darunter, dass "das Perimeterkabel dazu vorgesehen ist, unabhängig von einer Anordnung des Perimeterkabels und/oder des Arbeitsbereichs relativ zur Basisstation mit der Basisstation verbunden zu werden" soll insbesondere verstanden werden, dass das Perimeterkabel bei einer Montage des Arbeitsrobotersystems, insbesondere an beiden Enden, mit der Basisstation, insbesondere den Verbindungsschnittstellen, verbunden wird, egal wie eine Anordnung des Perimeterkabels außerhalb der Basisstation ausgebildet ist.

Die Steuer- und/oder Regeleinheit ist vorzugsweise dazu eingerichtet, mittels über die Sensoreinheit erfasster elektronischer Daten des magnetischen Felds, des Arbeitsbereichs, der Basisstation und/oder der Arbeitsrobotervorrichtung zumindest eine virtuelle Karte und/oder ein virtuelles Modell des Arbeitsrobotersystems, insbesondere des Arbeitsbereichs, zu erstellen. Es ist denkbar, dass die Sensoreinheit eine Vielzahl von voneinander verschiedenen Sensorelementen umfasst, wie beispielsweise zumindest einen Annäherungssensor, einen Positionsbestimmungssensor, eine Kamera mit Bildauswertung, einen Bewegungssensor o. dgl. In einer bevorzugten Ausgestaltung des Arbeitsrobotersystems umfasst die Sensoreinheit zumindest einen Bewegungssensor, beispielsweise einen Gyrosensor, welcher an der Arbeitsrobotervorrichtung angeordnet ist, insbesondere zu einer zumindest im Wesentlichen umgebungsunabhängigen Erfassung einer Bewegung der Arbeitsrobotervorrichtung. Bevorzugt ist die Steuer-und/oder Regeleinheit dazu eingerichtet, mittels der virtuellen Karte und/oder des virtuellen Modells zumindest eine Position der Arbeitsrobotervorrichtung relativ zu der Basisstation und/oder des Arbeitsbereichs zu ermitteln. Zusätzlich ist denkbar, dass die Steuer- und/oder Regeleinheit dazu eingerichtet ist, insbesondere mittels der Interfaceeinheit und/oder der Kommunikationseinheit, die virtuelle Karte und/oder das virtuelle Modell auszugeben, wobei insbesondere eine Position der Arbeitsrobotervorrichtung zeitsynchron angezeigt wird.

Durch die erfindungsgemäße Ausgestaltung des Arbeitsrobotersystems kann eine vorteilhaft einfache und schnelle Inbetriebnahme des Arbeitsrobotersystems und/oder der Arbeitsrobotervorrichtung ermöglicht werden, insbesondere da ein Benutzer das Perimeterkabel und die Basisstation zumindest im Wesentlichen unabhängig von einer Verbindungsrichtung und/oder einer Ausrichtung des Perimeterkabels relativ zu der Basisstation verbinden kann. Unter "im Wesentlichen unabhängig" soll insbesondere verstanden werden, dass eine Tätigkeit oder ein Bauteil zu einer bestimmten Funktion oder einem bestimmten Vorgang nicht benötigt wird und/oder von dieser entkoppelt ist, wobei insbesondere die Funktion oder der Vorgang auch ohne die Tätigkeit oder das Bauteil ausführbar ist. Über die Initialabfrage kann eine unmissverständliche Erfassung der Anordnung des Arbeitsbereichs relativ zu der Basisstation erreicht werden, wobei insbesondere ein fehlerhaftes Aufstellen der Basisstation und/oder des Perimeterkabels und/oder ein fehlerhaftes Verbinden des Perimeterkabels mit der Basisstation durch den Benutzer verhindert werden kann. Eine Montage des Systems kann vorteilhaft flexibel durch dem Benutzer erfolgen.

Des Weiteren wird vorgeschlagen, dass die mittels der Initialabfrage über die Interfaceeinheit erfasste Information als eine Richtungskenngröße der Basisstation relativ zu dem an die Basisstation grenzenden Arbeitsbereich ausgebildet ist. Es kann eine vorteilhaft intuitive Inbetriebnahme des Arbeitsrobotersystems und/oder der Arbeitsrobotervorrichtung ermöglicht werden, insbesondere da eine Aufforderung zu einer Richtungsangabe über einen geringen Grad an Abstraktion einem Benutzer übermittelt werden kann. Insbesondere gibt die Richtungskenngröße eine Richtung von der Basisstation zu dem Arbeitsbereich, insbesondere einem Teilbereich des Arbeitsbereichs, welcher an die Basisstation angrenzt, an. Vorzugsweise umfasst die Interfaceeinheit zumindest zwei, insbesondere zumindest vier, Bedienelemente, wobei insbesondere jedem Bedienelement ein Wert der Richtungskenngröße zugeordnet ist. Insbesondere sind/ist die Interfaceeinheit und/oder die Steuer- und/oder Regeleinheit dazu vorgesehen und/oder eingerichtet, insbesondere in der Ausgestaltung der Information als Richtungskenngröße der Basisstation relativ zu dem an die Basisstation grenzenden Arbeitsbereich, die Initialabfrage in einem mit der Basisstation verbundenen Zustand der Arbeitsrobotervorrichtung durchzuführen, insbesondere vor einem Trennen der Arbeitsrobotervorrichtung von der Basisstation. In einer bevorzugten Ausgestaltung der Interfaceeinheit umfasst die Interfaceeinheit vier Bedienelemente, wobei jedem der vier Bedienelemente eine Richtung von der Basisstation zugeordnet ist und wobei die Richtungen der vier Bedienelemente in einer Ebene angeordnet sind und jeweils einen Winkel von zumindest 90° zueinander aufweisen. Bevorzugt sind die vier Bedienelemente, insbesondere die den vier Bedienelementen zugeordneten Richtungen, zumindest im Wesentlichen parallel zu einem Untergrund und/oder einer Bodenfläche der Basisstation ausgerichtet. Unter "im Wesentlichen parallel" soll insbesondere eine Ausrichtung einer Geraden, einer Ebene oder einer Richtung, insbesondere der Bedienelemente, relativ zu einer anderen Geraden, einer anderen Ebene oder einer Bezugsrichtung, insbesondere dem Untergrund und/oder der Bodenfläche, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2° aufweist. Insbesondere ist die Basisstation dazu vorgesehen, über die Bodenfläche, insbesondere auf dem Untergrund, aufgestellt zu werden. Besonders bevorzugt ist die Steuer- und/oder Regeleinheit dazu eingerichtet, in zumindest einem Betriebszustand, insbesondere bei der Inbetriebnahme der Arbeitsrobotervorrichtung, in Abhängigkeit von der erfassten Richtungskenngröße der Basisstation relativ zu dem an die Basisstation grenzenden Arbeitsbereich die Anordnung des Arbeitsbereichs relativ zu der Basisstation zu ermitteln.

Zudem wird vorgeschlagen, dass die mittels der Initialabfrage über die Interfaceeinheit erfasste Information als eine Positionskenngröße der Arbeitsrobotervorrichtung innerhalb des Arbeitsbereichs ausgebildet ist. Es kann eine vorteilhaft intuitive Inbetriebnahme des Arbeitsrobotersystems und/oder der Arbeitsrobotervorrichtung ermöglicht werden, insbesondere da die Initialabfrage über eine geringe Anzahl an Angabemöglichkeiten genau durchgeführt werden kann. Es kann eine vorteilhaft einfache Verarbeitung der erfassten Information erfolgen, wobei insbesondere Hardwareanforderungen an die Steuer- und/oder Regeleinheit vorteilhaft gering gehalten werden können. Dadurch können vorteilhaft geringe Herstellungskosten erreicht werden. Unter einer "Positionskenngröße" soll insbesondere eine Kenngröße eines Objekts, insbesondere der Arbeitsrobotervorrichtung, verstanden werden, die eine Position des Objekts innerhalb eines Raumes oder einer Fläche, insbesondere dem Arbeitsbereich, und/oder relativ zu einem anderen Objekt, insbesondere der Basisstation, beschreibt. Insbesondere gibt die Positionskenngröße an, ob die Arbeitsvorrichtung, insbesondere vollständig, innerhalb des Arbeitsbereichs angeordnet ist. Vorzugsweise umfasst die Steuer-und/oder Regeleinheit genau zwei Werte der Positionskenngröße für die Initialabfrage, welche insbesondere dem Benutzer über die Interfaceeinheit bei der Initialabfrage als Auswahlmöglichkeiten angezeigt werden. Insbesondere sind die zwei Werte der Positionskenngröße als positive und negative Bewertung der Aussage über eine Anwesenheit der Arbeitsrobotervorrichtung innerhalb des Arbeitsbereichs ausgebildet. Vorzugsweise ist die Arbeitsrobotervorrichtung dazu vorgesehen, zu einer Ermittlung der Anordnung des Arbeitsbereichs relativ zu der Basisstation, insbesondere bei einem Einrichten des Arbeitsrobotersystems, innerhalb des Arbeitsbereichs angeordnet zu werden. Insbesondere ist die Arbeitsrobotervorrichtung, insbesondere die Steuer- und/oder Regeleinheit, dazu vorgesehen, zu einer Ermittlung der Anordnung des Arbeitsbereichs relativ zu der Basisstation, insbesondere unabhängig von der Initialabfrage, eine Position der Arbeitsrobotervorrichtung relativ zur Basisstation zu bestimmen. Insbesondere sind/ist die Interfaceeinheit und/oder die Steuer- und/oder Regeleinheit dazu vorgesehen und/oder eingerichtet, insbesondere in der Ausgestaltung der Information als Positionskenngröße der Arbeitsrobotervorrichtung innerhalb des Arbeitsbereichs, die Initialabfrage in einem von der Basisstation getrennten und/oder beabstandeten Zustand der Arbeitsrobotervorrichtung durchzuführen, insbesondere nach einem Trennen der Arbeitsrobotervorrichtung von der Basisstation. Insbesondere in einer Ausgestaltung, wobei die erfasste Information als Positionskenngröße der Arbeitsrobotervorrichtung innerhalb des Arbeitsbereichs ausgebildet ist, umfasst die Interfaceeinheit zumindest ein Bedienelement, insbesondere zumindest zwei Bedienelemente. Bevorzugt ist das Bedienelement dazu vorgesehen, bei der Initialabfrage während einer Anordnung der Arbeitsrobotervorrichtung innerhalb des Arbeitsbereichs, insbesondere zu einer Bestätigung der Anordnung der Arbeitsvorrichtung innerhalb des Arbeitsbereichs, durch den Benutzer betätigt zu werden. Alternativ ist denkbar, dass die mittels der Initialabfrage erfasste Information als eine Umlaufrichtung eines elektrischen Stroms ausgebildet ist, welcher von der Basisstation durch das Perimeterkabel fließt. Insbesondere ist die Umlaufrichtung durch eine Verbindungsart und/oder eine Verbindungsrichtung des Perimeterkabels mit der Basisstation für einen Benutzer erkennbar, wobei insbesondere eine Seite der Basisstation und/oder eine der Verbindungsschnittstellen als +-Pol ausgebildet ist. Beispielsweise gibt die erfasste Information an, ob die Umlaufrichtung mit dem Uhrzeigersinn oder gegen den Uhrzeigersinn ausgerichtet ist, insbesondere zumindest im Wesentlichen senkrecht zu einer Haupterstreckungsebene des Arbeitsrobotersystems und/oder entlang der Lotrichtung betrachtet. Unter "im Wesentlichen senkrecht" soll insbesondere eine Ausrichtung einer Geraden, einer Ebene oder einer Richtung, insbesondere einer Betrachtungsrichtung des Benutzers, relativ zu einer anderen Geraden, einer anderen Ebene oder einer Bezugsrichtung, insbesondere der Haupterstreckungsebene und/oder der Lotrichtung, verstanden werden, wobei die Gerade, die Ebene oder die Richtung und die andere Gerade, die andere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsebene" einer Baueinheit, insbesondere des Arbeitsrobotersystems, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Außerdem wird ein Verfahren zu einem Einrichten eines, insbesondere teilautonomen, erfindungsgemäßen Arbeitsrobotersystems vorgeschlagen, wobei in zumindest einem Verfahrensschritt, insbesondere bei einer Inbetriebnahme der Arbeitsrobotervorrichtung, mittels zumindest einer, insbesondere der vorher genannten, Interfaceeinheit des Arbeitsrobotersystems eine, insbesondere die vorher genannte, Initialabfrage von zumindest einer Information hinsichtlich einer Anordnung des Arbeitsbereichs relativ zu einer Basisstation des Arbeitsrobotersystems erfolgt, wobei in zumindest einem weiteren Verfahrensschritt mittels zumindest einer, insbesondere der vorher genannten, Steuer- und/oder Regeleinheit des Arbeitsrobotersystems in Abhängigkeit von der, mittels der Initialabfrage über die Interfaceeinheit erfassten Information eine Anordnung des Arbeitsbereichs relativ zu der Basisstation ermittelt wird.

Insbesondere in einer Ausgestaltung, bei der die erfasste Information als Richtungskenngröße der Basisstation relativ zu dem an die Basisstation grenzenden Arbeitsbereich ausgebildet ist, erfolgt die Initialabfrage mittels der Interfaceeinheit in einem mit der Basisstation verbundenen und/oder an der Basisstation angeordneten Zustand der Arbeitsrobotervorrichtung, beispielsweise bei einer elektrischen Verbindung der Basisstation mit dem Energieversorgungsnetz. Insbesondere falls mittels der Basisstation ein von der Basisstation getrennter Zustand der Arbeitsrobotervorrichtung erfasst wird, erfolgt vorzugsweise vor der Initialabfrage mittels der Interfaceeinheit eine Bedienaufforderung, insbesondere an einen Benutzer und/oder die externe Einheit, zu einer Verbindung und/oder Anordnung der Arbeitsrobotervorrichtung an der Basisstation. Insbesondere in einer Ausgestaltung, bei der die erfasste Information als eine Positionskenngröße der Arbeitsrobotervorrichtung innerhalb des Arbeitsbereichs ausgebildet ist, erfolgt die Initialabfrage mittels der Interfaceeinheit in einem von der Basisstation getrennten Zustand der Arbeitsrobotervorrichtung, wobei die Arbeitsrobotervorrichtung innerhalb des Arbeitsbereichs angeordnet ist. Insbesondere falls mittels der Basisstation ein mit der Basisstation verbundener und/oder an der Basisstation angeordneter Zustand der Arbeitsrobotervorrichtung erfasst wird, erfolgt vorzugsweise vor der Initialabfrage mittels der Interfaceeinheit eine Bedienaufforderung, insbesondere an einen Benutzer und/oder die externe Einheit, zu einer Anordnung der Arbeitsrobotervorrichtung innerhalb des Arbeitsbereichs. Alternativ oder zusätzlich ist denkbar, dass die Initialabfrage, insbesondere die Erfassung der mittels der Initialabfrage zu erfassenden Information, als ein UX-Prozess ausgebildet ist.

Durch die erfindungsgemäße Ausgestaltung des Verfahrens kann eine vorteilhaft einfache und schnelle Inbetriebnahme des Arbeitsrobotersystems und/oder der Arbeitsrobotervorrichtung ermöglicht werden, insbesondere da ein Benutzer das Perimeterkabel und die Basisstation unabhängig von einer Verbindungsrichtung und/oder einer Ausrichtung des Perimeterkabels relativ zu der Basisstation verbinden kann. Über die Initialabfrage kann eine unmissverständliche Erfassung der Anordnung des Arbeitsbereichs relativ zu der Basisstation erreicht werden, wobei insbesondere ein fehlerhaftes Aufstellen der Basisstation und/oder des Perimeterkabels und/oder ein fehlerhaftes Verbinden des Perimeterkabels mit der Basisstation durch den Benutzer verhindert werden kann. Eine Montage des Systems kann vorteilhaft flexibel durch den Benutzer erfolgen.

Des Weiteren wird vorgeschlagen, dass in zumindest einem Verfahrensschritt mittels der Steuer- und/oder Regeleinheit in Abhängigkeit von der ermittelten Anordnung des Arbeitsbereichs relativ zu der Basisstation eine Richtung von Feldlinien eines, insbesondere des vorher genannten, über die Basisstation erzeugten magnetischen Felds innerhalb des Arbeitsbereichs ermittelt wird. Es kann eine vorteilhaft einfache und schnelle Orientierung der Arbeitsrobotervorrichtung ermöglicht werden, insbesondere unabhängig von einer Montage des Arbeitsrobotersystems, insbesondere der Basisstation und/oder des Perimeterkabels, durch einen Benutzer. Insbesondere in einer Ausgestaltung, bei der die erfasste Information als Richtungskenngröße der Basisstation relativ zu dem an die Basisstation grenzenden Arbeitsbereich ausgebildet ist, erfolgt eine Ermittlung der Richtung der Feldlinien des über die Basisstation erzeugten magnetischen Felds innerhalb des Arbeitsbereichs mittels der Sensoreinheit über eine Bestimmung der Richtung von Feldlinien des magnetischen Felds zu einem Zeitpunkt einer Erfassung der Information, wobei insbesondere die Arbeitsrobotervorrichtung innerhalb des Arbeitsbereichs angeordnet ist. Insbesondere in einer Ausgestaltung, bei der die erfasste Information als eine Positionskenngröße der Arbeitsrobotervorrichtung innerhalb des Arbeitsbereichs ausgebildet ist, erfolgt eine Ermittlung der Richtung der Feldlinien des über die Basisstation erzeugten magnetischen Felds innerhalb des Arbeitsbereichs mittels der Steuer- und/oder Regeleinheit in Abhängigkeit von einer Anordnung der Verbindungschnittstellen und/oder einer Stromrichtung des über die Basisstation an die Verbindungsschnittstellen angelegten Stroms, welche(r) insbesondere unabhängig von einer Anordnung des Arbeitsbereichs relativ zur Basisstation ausgebildet sind/ist. Insbesondere ist die Anordnung der Verbindungsschnittstellen und/oder einer Stromrichtung des über die Basisstation an die Verbindungsschnittstellen angelegten Stroms in der Steuer- und/oder Regeleinheit hinterlegt.

Zudem wird vorgeschlagen, dass in zumindest einem Verfahrensschritt ein Nahbereich eines Perimeterkabels des Arbeitsrobotersystems mittels der Arbeitsrobotervorrichtung abgefahren wird, wobei über eine Messung eines, insbesondere des vorher genannten, über die Basisstation generierten magnetischen Felds und/oder einer zurückgelegten Strecke der Arbeitsrobotervorrichtung mittels der Steuer- und/oder Regeleinheit die mittels der Initialabfrage über die Interfaceeinheit erfasste Information überprüft wird. Es kann ein vorteilhaft sicherer Betrieb des Arbeitsrobotersystems ermöglicht werden, insbesondere da eine fehlerhafte Eingabe bei der Initialabfrage erkannt werden kann. Es können ungewollte Schäden und/oder Reparaturkosten an der Arbeitsrobotervorrichtung vorteilhaft verhindert werden, insbesondere da der Arbeitsbereich vor einem regulären Mähbetrieb eindeutig identifiziert ist. Vorzugsweise wird in zumindest einem Verfahrensschritt mittels einer Sensoreinheit, insbesondere periodisch oder kontinuierlich, das magnetische Feld und/oder die zurückgelegte Strecke der Arbeitsrobotervorrichtung erfasst. Unter einem "Nahbereich" eines Objekts, insbesondere des Perimeterkabels, soll insbesondere ein Bereich verstanden werden, der sich innerhalb eines maximalen Abstands, insbesondere von 1 m, vorzugsweise 0,7 m, bevorzugt 0,5 m und besonders bevorzugt 0,3 m, um das Objekt erstreckt, insbesondere in einer gemeinsamen Haupterstreckungsebene des Perimeterkabels und der Basisstation in einem montierten Zustand betrachtet. Bevorzugt ist die Arbeitsrobotervorrichtung, insbesondere die Sensoreinheit und/oder die Steuer-und/oder Regeleinheit, dazu vorgesehen und/oder eingerichtet, den Nahbereich des Perimeterkabels zu erkennen. Beispielsweise ist denkbar, dass eine Stromstärke des elektrischen Stroms, welcher mittels der Basisstation durch das Perimeterkabel fließt, in der Steuer- und/oder Regeleinheit hinterlegt ist, wobei insbesondere mittels der Arbeitsrobotervorrichtung, insbesondere der Sensoreinheit und/oder der Steuer- und/oder Regeleinheit, über eine Stärke des mittels der Sensoreinheit erfassten magnetischen Felds eine minimale Entfernung von der Sensoreinheit, insbesondere dem Sensorelement, zu dem Perimeterkabel ermittelt wird. Beispielsweise ist auch denkbar, dass die Sensoreinheit zumindest zwei Sensorelemente umfasst, wobei die Arbeitsrobotervorrichtung, insbesondere die Sensoreinheit und/oder die Steuer- und/oder Regeleinheit, dazu vorgesehen und/oder eingerichtet ist, während eines Abfahrens des Perimeterkabels ein Sensorelement der zwei Sensorelemente außerhalb des Arbeitsbereichs anzuordnen und ein anderes Sensorelement der zwei Sensorelemente innerhalb des Arbeitsbereichs anzuordnen, wobei insbesondere jedes der zwei Sensorelemente jeweils eine andere Richtung der Feldlinien des magnetischen Felds erfasst. Vorzugsweise fährt die Arbeitsrobotervorrichtung das Perimeterkabel entlang einer vollständigen Länge des Perimeterkabels ab, insbesondere von einer der Verbindungsschnittstellen der Basisstation zu einer anderen der Verbindungsschnittstellen der Basisstation. Bevorzugt erfolgt nach dem Abfahren des Perimeterkabels mittels der Steuer- und/oder Regeleinheit die Überprüfung der mittels der Initialabfrage über die Interfaceeinheit erfassten Information. Beispielsweise erfolgt mittels der Steuer- und/oder Regeleinheit eine virtuelle Darstellung des Perimeterkabels, der Basisstation und/oder des Arbeitsbereichs, wobei insbesondere mittels der Richtung der Feldlinien des magnetischen Felds und/oder der zurückgelegten Strecke und der Stromrichtung durch das Perimeterkabel und/oder durch die Verbindungsschnittstellen die Richtung der Feldlinien des magnetischen Felds innerhalb des Arbeitsbereichs ermittelt wird. Es ist auch denkbar, dass zu der Überprüfung der erfassten Information mittels der Steuer-und/oder Regeleinheit die virtuelle Karte und/oder das virtuelle Modell erstellt wird, wobei insbesondere aus einer Anordnung der virtuellen Karte und/oder des virtuellen Modells die Richtung von Feldlinien des magnetischen Felds innerhalb des Arbeitsbereichs und/oder eine Anordnung der Arbeitsrobotervorrichtung innerhalb des Arbeitsbereichs bestimmt wird. Insbesondere wird zu einer Überprüfung der erfassten Information der beim Abfahren des Perimeterkabels ermittelte Wert der Richtung mit dem mittels der erfassten Information ermittelten Wert der Richtung verglichen.

Ferner wird vorgeschlagen, dass in zumindest einem Verfahrensschritt, falls eine Überprüfung der mittels der Initialabfrage über die Interfaceeinheit erfassten Information negativ bewertet wurde, mittels der Interfaceeinheit, insbesondere zu einer Fortsetzung des Einrichtens des Arbeitsrobotersystems, eine Eingabe-und/oder Tätigkeitsaufforderung an einen Benutzer und/oder eine, insbesondere die vorher genannte, externe Einheit ausgegeben wird. Es kann vorteilhaft eine fehlerhafte Inbetriebnahme des Arbeitsrobotersystems verhindert werden, insbesondere da vor einem regulären Betrieb der Arbeitsrobotervorrichtung eine Korrektur einer von dem Benutzer angegebenen Information ermöglicht werden kann. Es kann eine vorteilhaft hohe Benutzerfreundlichkeit ermöglicht werden, insbesondere da Schäden durch fehlerhafte Angaben verhindert werden können. Insbesondere erfolgt eine negative Bewertung der Überprüfung, falls sich ein beim Abfahren des Perimeterkabels bestimmter Wert der Richtung der Feldlinien von der mittels der erfassten Information ermittelten Richtung der Feldlinien unterscheidet. Vorzugsweise erfolgt bei einer positiven Bewertung der Überprüfung, insbesondere falls der beim Abfahren des Perimeterkabels bestimmte Wert der Richtung der Feldlinien gleich der mittels der erfassten Information ermittelten Richtung der Feldlinien ist, mittels der Interfaceeinheit eine Ausgabe einer Betriebsbereitschaft des Arbeitsrobotersystems an den Benutzer und/oder die externe Einheit. Bevorzugt wird die Arbeitsrobotervorrichtung mittels der Steuer-und/oder Regeleinheit bei einer positiven Bewertung der Überprüfung in eine an der Basisstation, insbesondere der Roboterschnittstelle, angeordnete Position und/oder in einen mit der Basisstation, insbesondere der Roboterschnittstelle, verbundenen Zustand bewegt. Es ist denkbar, dass die Eingabe- und/oder Tätigkeitsaufforderung als eine Aufforderung an den Benutzer ausgebildet ist, einen der zwei verschiedenen ermittelten Werte für die Richtung der Feldlinien und/oder die Anordnung des Arbeitsbereichs relativ zu der Basisstation zu bestätigen. Alternativ oder zusätzlich ist denkbar, dass die Eingabe- und/oder Tätigkeitsaufforderung als eine Aufforderung ausgebildet ist, die Arbeitsrobotervorrichtung in die an der Basisstation, insbesondere der Roboterschnittstelle, angeordnete Position und/oder in den mit der Basisstation, insbesondere der Roboterschnittstelle, verbundenen Zustand zu bewegen, insbesondere zu einer Wiederherstellung eines Ausgangszustands des Arbeitsrobotersystems. Es ist denkbar, dass bei einer negativen Überprüfung ein Neustart des Verfahrens zum Einrichten des Arbeitsrobotersystems erfolgt, wobei insbesondere zusätzliche Informationen angefordert werden und/oder direkt eine weitere Initialabfrage erfolgt.

Des Weiteren wird vorgeschlagen, dass in zumindest einem Verfahrensschritt mittels der Steuer- und/oder Regeleinheit zumindest ein Anordnungsparameter des Arbeitsbereichs, insbesondere eine erfasste und/oder überprüfte Anordnung des Arbeitsbereichs relativ zu der Basisstation, und/oder eine ermittelte Richtung von Feldlinien eines, insbesondere des vorher genannten, über die Basisstation im Arbeitsbereich erzeugten magnetischen Felds in zumindest einer Speichereinheit des Arbeitsrobotersystems zumindest im Wesentlichen fehlerfrei wiederabrufbar hinterlegt wird. Es kann ein vorteilhaft fehlerfreier Betrieb des Arbeitsrobotersystems und/oder der Arbeitsrobotervorrichtung ermöglicht werden, insbesondere da ungewollte Fehler beim Abrufen der hinterlegten Daten verhindert werden können. Es kann vorteilhaft ein Überschreiben der hinterlegten Daten bei einem regulären Betrieb verhindert werden. Vorzugsweise ist der Anordnungsparameter als Anordnung des Arbeitsbereichs relativ zur Basisstation, als Richtung von Feldlinien des magnetischen Felds innerhalb des Arbeitsbereichs o. dgl. ausgebildet. Unter einem "Anordnungsparameter" soll insbesondere ein Parameter des Arbeitsbereichs verstanden werden, welcher die geometrische und/oder geografische Anordnung des Arbeitsbereichs relativ zu der Basisstation und/oder dem Perimeterkabel beschreibt. Es ist denkbar, dass der Anordnungsparameter als die mittels der Initialabfrage erfasste Information ausgebildet ist, mittels der Steuer- und/oder Regeleinheit aus der mittels der Initialabfrage erfassten Information ermittelt wird und/oder über zumindest eine Fortbewegungsstrecke der Arbeitsrobotervorrichtung ermittelt wird. Bevorzugt erfolgt eine Hinterlegung des Anordnungsparameters in der Speichereinheit nach einer positiv bewerteten Überprüfung der erfassten Information. Darunter, dass der Anordnungsparameter "im Wesentlichen fehlerfrei wiederabrufbar hinterlegt wird", soll insbesondere verstanden werden, dass der Anordnungsparameter mittels eines Datenspeicherverfahrens hinterlegt wird, welches dazu vorgesehen ist, ein fehlerhaftes Wiederabrufen des Anordnungsparameters von der Speichereinheit, beispielsweise durch Bitfehler und/oder ein fehlerhaftes Speicherelement der Speichereinheit, zumindest im Wesentlichen zu verhindern. Besonders bevorzugt wird der Anordnungsparameter mittels der Steuer- und/oder Regeleinheit über ein Prüfsummen-Verfahren und/oder über eine Hashfunktion in der Speichereinheit hinterlegt. Bevorzugt sind/ist die Steuer- und/oder Regeleinheit und/oder die Speichereinheit dazu vorgesehen, den Anordnungsparameter schreibgeschützt zu speichern, wobei insbesondere der Anordnungsparameter während eines regulären Mähbetriebs, insbesondere unabhängig von einem Einrichtungsverfahren, nicht überschrieben werden kann.

Außerdem wird eine Arbeitsrobotervorrichtung, insbesondere ein Mähroboter, eines erfindungsgemäßen Arbeitsrobotersystems vorgeschlagen.

Durch die erfindungsgemäße Ausgestaltung der Arbeitsrobotervorrichtung kann eine vorteilhaft einfache und schnelle Inbetriebnahme des Arbeitsrobotersystems und/oder der Arbeitsrobotervorrichtung ermöglicht werden, insbesondere da ein Benutzer das Perimeterkabel und die Basisstation unabhängig von einer Verbindungsrichtung und/oder einer Ausrichtung des Perimeterkabels relativ zu der Basisstation verbinden kann. Über die Initialabfrage kann eine unmissverständliche Erfassung der Anordnung des Arbeitsbereichs relativ zu der Basisstation erreicht werden, wobei insbesondere ein fehlerhaftes Aufstellen der Basisstation und/oder des Perimeterkabels und/oder ein fehlerhaftes Verbinden des Perimeterkabels mit der Basisstation durch den Benutzer verhindert werden kann. Eine Montage des Systems kann vorteilhaft flexibel durch den Benutzer erfolgen.

Weiter wird eine Basisstation eines erfindungsgemäßen Arbeitsrobotersystems vorgeschlagen.

Durch die erfindungsgemäße Ausgestaltung der Basisstation kann eine vorteilhaft einfache und schnelle Inbetriebnahme des Arbeitsrobotersystems und/oder der Arbeitsrobotervorrichtung ermöglicht werden, insbesondere da ein Benutzer das Perimeterkabel und die Basisstation unabhängig von einer Verbindungsrichtung und/oder einer Ausrichtung des Perimeterkabels relativ zu der Basisstation verbinden kann. Über die Initialabfrage kann eine unmissverständliche Erfassung der Anordnung des Arbeitsbereichs relativ zu der Basisstation erreicht werden, wobei insbesondere ein fehlerhaftes Aufstellen der Basisstation und/oder des Perimeterkabels und/oder ein fehlerhaftes Verbinden des Perimeterkabels mit der Basisstation durch den Benutzer verhindert werden kann. Eine Montage des Systems kann vorteilhaft flexibel durch dem Benutzer erfolgen.

Das erfindungsgemäße Arbeitsrobotersystem, das erfindungsgemäße Verfahren, die erfindungsgemäße Arbeitsrobotervorrichtung und/oder die erfindungsgemäße Basisstation sollen/soll hierbei nicht auf die oben beschriebene Anwendung und Ausführungsform beschränkt sein. Insbesondere können/kann das erfindungsgemäße Arbeitsrobotersystem, das erfindungsgemäße Verfahren, die erfindungsgemäße Arbeitsrobotervorrichtung und/oder die erfindungsgemäße Basisstation zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Arbeitsrobotersystems zur Durchführung eines erfindungsgemäßen Verfahrens zu einem Einrichten des Arbeitsrobotersystems, mit einer mobilen erfindungsgemäßen Arbeitsrobotervorrichtung, einer erfindungsgemäßen Basisstation und einem Perimeterkabel in einem montierten Zustand,
- Fig. 2: eine schematische Detailansicht der erfindungsgemäßen Arbeitsrobotervorrichtung und der erfindungsgemäßen Basisstation mit einer an der Basisstation angeordneten Interfaceeinheit,
- Fig. 3: einen schematischen Ablauf des erfindungsgemäßen Verfahrens und
- Fig. 4: eine schematische Darstellung einer alternativen Ausgestaltung eines erfindungsgemäßen Arbeitsrobotersystems mit einer erfindungsgemäßen Arbeitsrobotervorrichtung, die eine Interfaceeinheit umfasst.

### Beschreibung der Ausführungsbeispiele

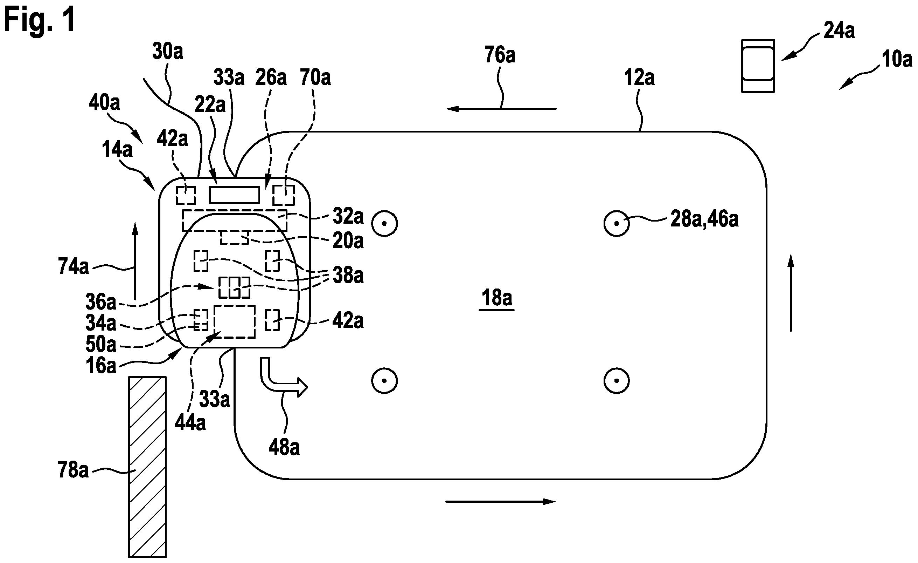

In der Figur 1 ist ein als Mährobotersystem ausgebildetes Arbeitsrobotersystem 10a in einem montierten Zustand gezeigt, das an einem Garten angeordnet ist. Das Arbeitsrobotersystem 10a umfasst ein Perimeterkabel 12a, eine Basisstation 14a und eine als Mähroboter ausgebildete mobile Arbeitsrobotervorrichtung 16a. Es sind aber auch andere Ausgestaltungen des Arbeitsrobotersystems 10a, insbesondere mit mehr als einer Arbeitsrobotervorrichtung 16a, und/oder der Arbeitsrobotervorrichtung 16a denkbar. Die Basisstation 14a und das Perimeterkabel 12a begrenzen einen Arbeitsbereich 18a. Die Arbeitsrobotervorrichtung 16a ist dazu vorgesehen, den Arbeitsbereich 18a zu bearbeiten, wobei insbesondere ein Rasen innerhalb des Arbeitsbereichs 18a gemäht wird. Die Arbeitsrobotervorrichtung 16a ist dazu vorgesehen, sich zum Bearbeiten des Arbeitsbereichs 18a innerhalb des Arbeitsbereichs 18a zu bewegen, insbesondere über den Rasen zu fahren. Die Basisstation 14a ist zu einem Laden der Arbeitsrobotervorrichtung 16a vorgesehen, wobei insbesondere elektrische Energie von der Basisstation 14a an eine Energiespeichereinheit 20a der Arbeitsrobotervorrichtung 16a übertragen wird. Das Perimeterkabel 12a ist dazu vorgesehen, insbesondere unabhängig von einer Anordnung des Perimeterkabels 12a und/oder des Arbeitsbereichs 18a relativ zur Basisstation 14a, elektrisch und mechanisch mit der Basisstation 14a verbunden zu werden.

Die Basisstation 14a umfasst eine Interfaceeinheit 22a, die insbesondere zu einer Benutzerinteraktion vorgesehen ist. Die Interfaceeinheit 22a ist an der Basisstation 14a, insbesondere einer Oberseite eines Gehäuses der Basisstation 14a, angeordnet. Die Interfaceeinheit 22a ist dazu vorgesehen, eine Initialabfrage zu einer Erfassung einer Information an einen Benutzer und/oder eine externe Einheit 24a auszugeben. Die Interfaceeinheit 22a ist dazu vorgesehen, die Initialabfrage als akustisches und/oder optisches Signal auszugeben und/oder die Initialabfrage als ein elektronisches Signal an die beispielsweise als Smartphone des Benutzers ausgebildete externe Einheit 24a auszugeben. Es sind aber auch andere Ausgestaltungen der Interfaceeinheit 22a denkbar. Das Arbeitsrobotersystem 10a umfasst eine Steuer- und/oder Regeleinheit 26a, welche dazu eingerichtet ist, in zumindest einem Betriebszustand, insbesondere bei einer Inbetriebnahme der Arbeitsrobotervorrichtung 16a, in Abhängigkeit von einer mittels einer Initialabfrage über die Interfaceeinheit 22a erfassten Information eine Anordnung des Arbeitsbereichs 18a relativ zu der Basisstation 14a zu ermitteln.

Die Basisstation 14a ist dazu vorgesehen, mittels eines elektrischen Stroms durch das Perimeterkabel 12a ein magnetisches Feld 28a innerhalb des Arbeitsbereichs 18a zu erzeugen. Die Basisstation 14a ist vorzugsweise elektrisch mit einem externen Stromversorgungsnetz 30a verbunden. Die Basisstation 14a umfasst eine Roboterschnittstelle 32a zu einer elektrischen und mechanischen Verbindung mit der Arbeitsrobotervorrichtung 16a. Die Arbeitsrobotervorrichtung 16a ist dazu vorgesehen und/oder eingerichtet, sich in zumindest einem Betriebszustand, insbesondere zu einem Laden und/oder bei einer Deaktivierung des Arbeitsrobotersystems 10a, zu der Basisstation 14a zu bewegen und/oder sich über die Roboterschnittstelle 32a mit der Basisstation 14a zu verbinden. Insbesondere ist die Arbeitsrobotervorrichtung 16a dazu vorgesehen, bei einem Einrichten des Arbeitsrobotersystems 10a mit der Basisstation 14a verbunden zu sein und/oder an der Basisstation 14a angeordnet zu sein. Die Basisstation 14a umfasst zwei Verbindungsschnittstellen 33a zu einer elektrischen und mechanischen Verbindung des Perimeterkabels 12a und der Basisstation 14a.

Die Steuer- und/oder Regeleinheit 26a ist als Teil der Basisstation 14a ausgebildet und insbesondere innerhalb des Gehäuses der Basisstation 14a angeordnet. Insbesondere umfasst die Arbeitsrobotervorrichtung 16a zumindest eine Kontrolleinheit 34a zu einer teilautonomen Steuerung. Es ist aber auch denkbar, dass die Steuer- und/oder Regeleinheit 26a als Teil der Arbeitsrobotervorrichtung 16a ausgebildet ist, wobei insbesondere die Kontrolleinheit 34a und die Steuer-und/oder Regeleinheit 26a einteilig ausgebildet sind. Die Arbeitsrobotervorrichtung 16a umfasst einen als Elektromotor ausgebildeten Motor 36a und drei Fortbewegungselemente 38a, welche insbesondere als Räder ausgebildet sind. Es sind aber auch andere Ausgestaltungen der Arbeitsrobotervorrichtung 16a denkbar, insbesondere mit einer von einem Elektromotor verschiedenen Ausgestaltung des Motors 36a und/oder mit einer verschiedenen Anzahl an Motoren 26a und/oder Fortbewegungselementen 38a. Der Motor 36a ist dazu vorgesehen, die Fortbewegungselemente 38a zu einem Bewegen der mobilen Arbeitsrobotervorrichtung 16a, insbesondere innerhalb des Arbeitsbereichs 18a, anzutreiben. Vorzugsweise ist die Kontrolleinheit 34a dazu vorgesehen, den Motor 36a und/oder einen Lenkeinschlag der Fortbewegungselemente 38a zu steuern und/oder zu regeln. Vorzugsweise ist der Motor 36a dazu vorgesehen, zumindest eines der Fortbewegungselemente 38a anzutreiben und/oder zumindest eine Einstellung eines Lenkeinschlags zumindest eines der Fortbewegungselemente 38a anzutreiben. Bevorzugt ist der Motor 36a zumindest kraftschlüssig mit zumindest einem der Fortbewegungselemente 38a verbunden. Besonders bevorzugt ist der Motor 36a zumindest elektrisch mit der Energiespeichereinheit 20a verbunden, was insbesondere in den Figuren aus Gründen der Übersichtlichkeit nicht gezeigt ist. Bevorzugt ist die Energiespeichereinheit 20a dazu vorgesehen, zumindest den Motor 36a, die Kontrolleinheit 34a, das Sensorelement 62a und das weitere Sensorelement 66a elektrisch zu versorgen. Das Arbeitsrobotersystem 10a umfasst eine Kommunikationseinheit 40a zu einer Datenübertragung zwischen der Basisstation 14a und der Arbeitsrobotervorrichtung 16a und/oder der externen Einheit 24a. Die Kommunikationseinheit 40a ist als ein Funksystem ausgebildet, wobei elektronische Daten zwischen der Basisstation 14a und der Arbeitsrobotervorrichtung 16a und/oder der externen Einheit 24a insbesondere über Funkwellen übertragen werden. Die Kommunikationseinheit 40a umfasst zwei Kommunikationselemente 42a, wobei ein erstes Kommunikationselement 42a der zwei Kommunikationselemente 42a als Teil der Basisstation 14a ausgebildet ist und ein zweites Kommunikationselement 42a der zwei Kommunikationselemente 42a als Teil der Arbeitsrobotervorrichtung 16a ausgebildet ist. Die zwei Kommunikationselemente 42a sind als Funkschnittstellen ausgebildet. Es sind aber auch andere Ausgestaltungen der Kommunikationseinheit 40a denkbar. Das Arbeitsrobotersystem 10a umfasst eine Sensoreinheit 44a, die zumindest teilweise an der Arbeitsrobotervorrichtung 16a angeordnet ist.

Die Steuer- und/oder Regeleinheit 26a ist dazu eingerichtet, in Abhängigkeit von der ermittelten Anordnung des Arbeitsbereichs 18a relativ zu der Basisstation 14a, eine Richtung 46a von Feldlinien des mittels der Basisstation 14a und/oder des Perimeterkabels 12a generierten magnetischen Felds 28a innerhalb des Arbeitsbereichs 18a zu bestimmen. Die Steuer- und/oder Regeleinheit 26a, insbesondere die Kontrolleinheit 34a, ist dazu vorgesehen, in Abhängigkeit von der ermittelten Anordnung des Arbeitsbereichs 18a relativ zu der Basisstation 14a eine Ausfahrrichtung 48a der Arbeitsrobotervorrichtung 16a zu bestimmen. Insbesondere ist die Steuer- und/oder Regeleinheit 26a dazu eingerichtet, nach einem Ausfahren der Arbeitsrobotervorrichtung 16a in Ausfahrrichtung 48a in den Arbeitsbereich 18a über die Sensoreinheit 44a die Richtung 46a von Feldlinien des mittels des Perimeterkabels 12a generierten magnetischen Felds 28a innerhalb des Arbeitsbereichs 18a zu bestimmen. Vorzugsweise kann durch das Ausfahren in Ausfahrrichtung 48a eine Kollision der Arbeitsrobotervorrichtung 16a mit einem Objekt 78a außerhalb des Arbeitsbereichs 18a verhindert werden. Insbesondere ist eine Ausfahrstrecke der Arbeitsrobotervorrichtung 16a, welche entlang der Ausfahrrichtung 48a verläuft, als eine gegen die Verbindungsrichtung 74a laufende 90°-Kurve hin zum Arbeitsbereich 18a ausgebildet. Die Steuer-und/oder Regeleinheit 26a umfasst eine Speichereinheit 50a zu einem zumindest im Wesentlichen permanenten Hinterlegen von elektronischen Daten. Die Steuer-und/oder Regeleinheit 26a ist dazu eingerichtet, zumindest einen Anordnungsparameter des Arbeitsbereichs 18a, insbesondere eine erfasste und/oder überprüfte Anordnung des Arbeitsbereichs 18a relativ zu der Basisstation 14a und/oder eine ermittelte Richtung 46a von Feldlinien eines über die Basisstation 14a im Arbeitsbereich 18a erzeugten magnetischen Felds 28a, in der Speichereinheit 50a des Arbeitsrobotersystems 10a zumindest im Wesentlichen fehlerfrei wiederabrufbar zu hinterlegen.

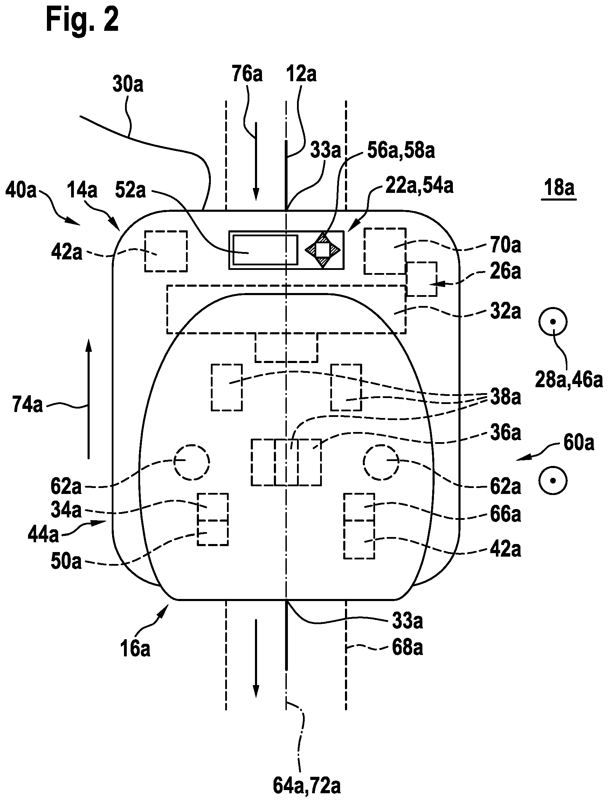

In Figur 2 ist eine Detailansicht des Arbeitsrobotersystems 10a in einem Bereich der Arbeitsrobotervorrichtung 16a gezeigt, welche an der Basisstation 14a angeordnet ist. Die Interfaceeinheit 22a umfasst ein Display 52a und eine Betätigungseinheit 54a, welche vier Betätigungselemente 56a aufweist. Die mittels der Initialabfrage über die Interfaceeinheit 22a erfasste Information ist als eine Richtungskenngröße der Basisstation 14a relativ zu dem an die Basisstation 14a grenzenden Arbeitsbereich 18a ausgebildet. Die vier Betätigungselemente 56a sind insbesondere zumindest im Wesentlichen parallel zu einer Oberseite eines Gehäuses der Basisstation 14a und/oder zu einer Haupterstreckungsebene der Basisstation 14a und/oder des Arbeitsbereichs 18a angeordnet. Jedem der vier Betätigungselemente 56a ist über die Steuer- und/oder Regeleinheit 26a für die Initialabfrage genau eine Richtung 58a zugeordnet, wobei insbesondere die zugeordneten Richtungen 58a jeweils einen Winkel von zumindest 90° relativ zueinander aufweisen. Die Interfaceeinheit 22a ist dazu vorgesehen, einem Benutzer, insbesondere mittels des Displays 52a, eine Aufforderung zu einem Eingeben einer Richtung, die von der Basisstation 14a zu dem Arbeitsbereich 18a, insbesondere einem Teilbereich 60a des Arbeitsbereichs 18a, welcher an die Basisstation 14a grenzt, zeigt, der Initialabfrage auszugeben.

Die Sensoreinheit 44a umfasst zwei Sensorelemente 62a, die zu einer Erfassung des magnetischen Felds 28a vorgesehen sind. Die Sensorelemente 62a sind an der Arbeitsrobotervorrichtung 16a, insbesondere innerhalb eines Gehäuses der Arbeitsrobotervorrichtung 16a, angeordnet. Die Sensorelemente 62a sind als Spulen ausgebildet, durch die in Abhängigkeit von dem magnetischen Feld 28a ein Strom fließt. Eine Richtung eines in den Sensorelementen 62a mittels des erfassten magnetischen Felds 28a induzierten Stroms ist abhängig von der Richtung 46a der Feldlinien des magnetischen Felds 28a. Die Sensorelemente 62a sind entlang einer Längsachse 64a der Arbeitsrobotervorrichtung 16a in gleichem Abstand zur Längsachse 64a nebeneinander angeordnet. Vorzugsweise ist die Arbeitsrobotervorrichtung 16a dazu vorgesehen, sich in einer geradlinigen Bewegung in eine Richtung zu bewegen, welche zumindest im Wesentlichen parallel zur Längsachse 64a ausgerichtet ist. Die Arbeitsrobotervorrichtung 16a ist dazu vorgesehen und/oder eingerichtet, sich zu einem Abfahren des Perimeterkabels 12a derart zu bewegen, dass ein Sensorelement 62a der zwei Sensorelemente 62a, insbesondere in einer Projektionsebene betrachtet, außerhalb des Arbeitsbereichs 18a angeordnet ist und ein anderes Sensorelement 62a der zwei Sensorelemente 62a, insbesondere in der Projektionsebene betrachtet, innerhalb des Arbeitsbereichs 18a angeordnet ist. Insbesondere wird bei dem Abfahren des Perimeterkabels 12a über das Sensorelement 62a eine andere Stromrichtung erfasst als über das andere Sensorelement 62a. Vorzugsweise ist die Arbeitsrobotervorrichtung 16a und/oder die Steuer- und/oder Regeleinheit 26a dazu vorgesehen, über eine zurückgelegte Strecke der Arbeitsrobotervorrichtung 16a beim Abfahren des Perimeterkabels 12a und die erfassten Richtungen 46a der Feldlinien des magnetischen Felds 28a über das Sensorelement 62a und das andere Sensorelement 62a eine Richtungskenngröße der Basisstation 14a relativ zu dem an die Basisstation 14a grenzenden Arbeitsbereich 18a zu ermitteln und vorzugsweise die über die Initialabfrage erfasste Information zu überprüfen.

Die Sensoreinheit 44a weist ein weiteres Sensorelement 66a auf, welches als ein Positionssensor ausgebildet ist und an der Arbeitsrobotervorrichtung 16a angeordnet ist. Das weitere Sensorelement 66a ist dazu vorgesehen, eine Position der Arbeitsrobotervorrichtung 16a relativ zu der Basisstation 14a, dem Arbeitsbereich 18a und/oder dem Perimeterkabel 12a zu erfassen. Beispielsweise ist das weitere Sensorelement 66a als Teil eines GPS-Systems ausgebildet. Es sind aber auch andere Ausgestaltungen des weiteren Sensorelements 66a denkbar. Vorzugsweise ist die Steuer- und/oder Regeleinheit 26a dazu eingerichtet, in Abhängigkeit von mittels des weiteren Sensorelements 66a erfassten Daten eine Position und eine Fortbewegungsstrecke der Arbeitsrobotervorrichtung 16a im Raum zu ermitteln.

Besonders bevorzugt sind die Verbindungsschnittstellen 33a, insbesondere zumindest im Wesentlichen senkrecht zu einer Haupterstreckungsebene der Basisstation 14a betrachtet, entlang einer Längsachse 72a der Basisstation 14a auf zwei voneinander abgewandten Seiten der Basisstation 14a angeordnet. Es ist auch denkbar, dass die Verbindungsschnittstellen 33a zusammen an einer Unterseite der Basisstation 14a angeordnet sind. Bevorzugt sind die Verbindungsschnittstellen 33a entlang der Längsachse 72a der Basisstation 14a betrachtet mittig an dem Gehäuse der Basisstation 14a angeordnet. Bevorzugt umfasst die Basisstation 14a, insbesondere die Roboterschnittstelle 32a, eine Verbindungsrichtung 74a, entlang derer die Arbeitsrobotervorrichtung 16a mit der Basisstation 14a, insbesondere über die Roboterschnittstelle 32a, verbindbar ist. Besonders bevorzugt ist die Verbindungsrichtung 74a, insbesondere in zumindest einer Projektionsebene der Basisstation 14a betrachtet, entlang der Längsachse 72a der Basisstation 14a angeordnet. Die Basisstation 14a ist dazu vorgesehen, zur Erzeugung des magnetischen Felds 28a den Storm über die Verbindungsschnittstellen 33a in einer gleichbleibenden und/oder konstanten Stromrichtung 76a durch das Perimeterkabel 12a fließen zu lassen. Die Richtung 46a der Feldlinien des magnetischen Felds 28a wird über die Maxwell'schen Gleichungen durch die Stromrichtung 76a des Stroms, welcher durch das Perimeterkabel 12a fließt, bestimmt. Die Verbindungsschnittstellen 33a sind als Elektrostecker ausgebildet. Es sind aber auch andere Ausgestaltungen der Basisstation 14a, insbesondere der Verbindungsschnittstellen 33a und/oder der Roboterschnittstelle 32a, denkbar. Vorzugsweise ist die Verbindungsrichtung 74a in einem Nahbereich der Basisstation 14a zumindest im Wesentlichen parallel zu dem Perimeterkabel 12a ausgerichtet, insbesondere parallel zu einer Erstreckung des Perimeterkabels 12a an einer der Verbindungsschnittstellen 33a.

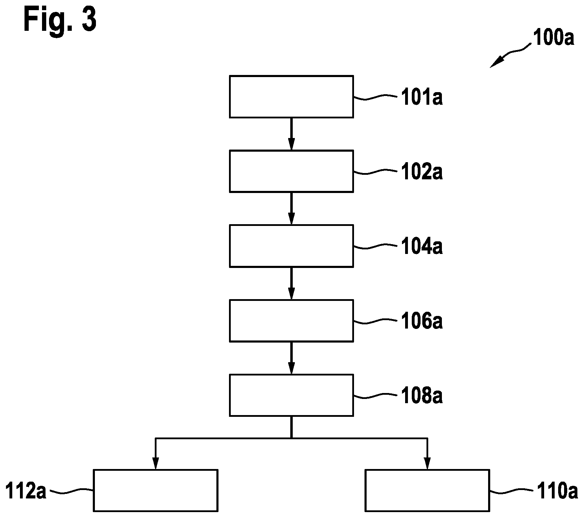

In Figur 3 ist ein beispielhafter Ablauf eines Verfahrens 100a zu einem Einrichten des Arbeitsrobotersystems 10a gezeigt. In einem Verfahrensschritt 101a des Verfahrens 100a wird die Basisstation 14a an dem Arbeitsbereich 18a aufgestellt und das Perimeterkabel 12a derart ausgelegt, dass die Basisstation 14a und das Perimeterkabel 12a den Arbeitsbereich 18a begrenzen. Insbesondere wird die Basisstation 14a bei einem Aufstellen mit dem Stromversorgungsnetz 30a verbunden. In einem Verfahrensschritt des Verfahrens 100a, insbesondere dem Verfahrensschritt 101a, wird das Perimeterkabel 12a über die Verbindungsschnittstellen 33a mit der Basisstation 14a verbunden. Bevorzugt bei einem Verbinden des Perimeterkabels 12a mit der Basisstation 14a und/oder einer Aktivierung der Basisstation 14a nach einem Verbinden des Perimeterkabels 12a fließt der Strom in Stromrichtung 76a durch das Perimeterkabel 12a, wobei das magnetische Feld 28a innerhalb des Arbeitsbereichs 18a erzeugt wird. Bevorzugt fließt der Strom durch das Perimeterkabel 12a nur wenn sich die Arbeitsrobotervorrichtung 16a innerhalb des Arbeitsbereichs 18a bewegt. Insbesondere falls die Arbeitsrobotervorrichtung 16a an der Basisstation 14a, insbesondere der Roboterschnittstelle 32a, angeordnet ist und/oder deaktiviert ist, wird das Perimeterkabel 12a mittels der Basisstation 14a stromlos geschaltet. In einem weiteren Verfahrensschritt 102a des Verfahrens 100a erfolgt bei einer Inbetriebnahme der Arbeitsrobotervorrichtung 16a mittels der Interfaceeinheit 22a des Arbeitsrobotersystems 10a die Initialabfrage von der als Richtungskenngröße der Basisstation 14a relativ zu dem an die Basisstation 14a grenzenden Arbeitsbereich 18a ausgebildeten Information hinsichtlich einer Anordnung des Arbeitsbereichs 18a relativ zu einer Basisstation 14a des Arbeitsrobotersystems 10a. Vorzugsweise erfolgt die Initialabfrage durch die Interfaceeinheit 22a automatisch bei einer Aktivierung des Arbeitsrobotersystems 10a, insbesondere der Basisstation 14a und/oder der Arbeitsrobotervorrichtung 16a. In einem weiteren Verfahrensschritt 104a des Verfahrens 100a wird mittels der Steuer- und/oder Regeleinheit 26a des Arbeitsrobotersystems 10a in Abhängigkeit von der, mittels der Initialabfrage über die Interfaceeinheit 22a erfassten Information eine Anordnung des Arbeitsbereichs 18a relativ zu der Basisstation 14a ermittelt. In einem weiteren Verfahrensschritt 106a des Verfahrens 100a wird mittels der Steuer- und/oder Regeleinheit 26a in Abhängigkeit von der ermittelten Anordnung des Arbeitsbereichs 18a relativ zu der Basisstation 14a die Richtung 46a von Feldlinien des über die Basisstation 14a und/oder des Perimeterkabels 12a erzeugten magnetischen Felds 28a innerhalb des Arbeitsbereichs 18a ermittelt, wobei insbesondere die Arbeitsrobotervorrichtung 16a in eine dem Arbeitsbereich 18a zugewandte Richtung, insbesondere der Ausfahrrichtung 48a, aus der Basisstation 14a ausfährt und in einem von der Basisstation 14a beabstandeten Zustand mittels der Sensorelemente 62a die Richtung 46a der Feldlinien des magnetischen Felds 28a erfasst. In einem weiteren Verfahrensschritt 108a des Verfahrens 100a wird ein Nahbereich 68a des Perimeterkabels 12a (siehe Figur 2) mittels der Arbeitsrobotervorrichtung 16a abgefahren, wobei über eine Messung des über die Basisstation 14a und/oder das Perimeterkabel 12a generierten magnetischen Felds 28a und/oder einer zurückgelegten Strecke der Arbeitsrobotervorrichtung 16a mittels der Steuer- und/oder Regeleinheit 26a die mittels der Initialabfrage über die Interfaceeinheit 22a erfasste Information überprüft wird. Vorzugsweise erfolgt das Abfahren des Perimeterkabels 12a, insbesondere von einem Ausfahren aus der Basisstation aus, entlang dem Perimeterkabel 12a innerhalb des Nahbereichs 68a des Perimeterkabels 12a, bis die Arbeitsrobotervorrichtung 16a wieder die Basisstation 14a erreicht, insbesondere an einer der Roboterschnittstelle 32a abgewandten Seite der Basisstation 14a. Insbesondere wird eine Annäherung der Arbeitsrobotervorrichtung 16a an die Basisstation 14a nach einem Abfahren des Perimeterkabels 12a mittels des weiteren Sensorelements 66a erfasst. Vorzugsweise umfährt die Arbeitsrobotervorrichtung 16a die Basisstation 14a nach dem Abfahren des Perimeterkabels 12a und nimmt einen mit der Roboterschnittstelle 32a verbundenen Zustand ein. In einem weiteren Verfahrensschritt 110a des Verfahrens 100a wird, falls eine Überprüfung der mittels der Initialabfrage über die Interfaceeinheit 22a erfassten Information negativ bewertet wurde, mittels der Interfaceeinheit 22a, insbesondere zu einer Fortsetzung des Einrichtens des Arbeitsrobotersystems 10a, eine Eingabe- und/oder Tätigkeitsaufforderung an einen Benutzer und/oder die externe Einheit 24a ausgegeben. In einem weiteren Verfahrensschritt 112a des Verfahrens 100a wird, insbesondere falls die Überprüfung der mittels der Initialabfrage über die Interfaceeinheit 22a erfassten Information positiv bewertet wurde, mittels der Steuer- und/oder Regeleinheit 26a zumindest ein Anordnungsparameter des Arbeitsbereichs 18a, insbesondere eine erfasste und/oder überprüfte Anordnung des Arbeitsbereichs 18a relativ zu der Basisstation 14a und/oder die ermittelte Richtung 46a von Feldlinien des über die Basisstation 14a im Arbeitsbereich 18a erzeugten magnetischen Felds 28a in der Speichereinheit 50a des Arbeitsrobotersystems 10a zumindest im Wesentlichen fehlerfrei wiederabrufbar hinterlegt. Vorzugsweise ist das Einrichten des Arbeitsrobotersystems 10a bei einem Verbinden der Arbeitsrobotervorrichtung 16a mit der Roboterschnittstelle 32a und falls die Überprüfung der mittels der Initialabfrage über die Interfaceeinheit 22a erfassten Information positiv bewertet wurde abgeschlossen, wobei insbesondere das Arbeitsrobotersystem 10a für einen regulären Mähbetrieb zur Verfügung steht. Vorzugsweise wird, falls die Überprüfung der mittels der Initialabfrage über die Interfaceeinheit 22a erfassten Information positiv bewertet wurde, mittels der Interfaceeinheit 22a zumindest ein optisches, akustisches und/oder haptisches Signal ausgegeben, welches einen erfolgreichen Abschluss des Einrichtens des Arbeitsrobotersystems 10a signalisiert. Insbesondere während eines regulären Betriebs des Arbeitsrobotersystems 10a ist denkbar, dass das Verfahren 100a zum Einrichten über eine Benutzereingabe mittels der Interfaceeinheit 22a und/oder der Kommunikationseinheit 40a erneut gestartet wird. Vorzugsweise wird bei einem regulären Betrieb des Arbeitsrobotersystems 10a regelmäßig die Richtung 46a der Feldlinien des magnetischen Felds 28a innerhalb des Arbeitsbereichs 18a erfasst und mit in der Speichereinheit 50a hinterlegten elektronischen Daten verglichen. Falls sich die Richtung 46a der Feldlinien des magnetischen Felds 28a während des regulären Betriebs ändert, wird vorzugsweise mittels der Steuer- und/oder Regeleinheit 26a und/oder der Interfaceeinheit 22a zumindest eine Warnung an einen Benutzer ausgegeben und/oder die Arbeitsrobotervorrichtung 16a zu einer Wartung des Arbeitsrobotersystems 10a deaktiviert und/oder gestoppt.

Alternativ ist denkbar, dass in einem Verfahrensschritt des Verfahrens 100a ein Wert für die Stromrichtung 76a des elektrischen Stroms durch das Perimeterkabel 12a und/oder die Richtung 46a von Feldlinien des magnetischen Felds 28a innerhalb des Arbeitsbereichs 18a vorgegeben werden, beispielsweise zu einer Synchronisation mit anderen Geräten des Arbeitsrobotersystems und/oder eines externen Arbeitssystems. Bevorzugt wird vorzugsweise mittels der Steuer-und/oder Regeleinheit 26a nach der positiv bewerteten Überprüfung der erfassten Information ein ermittelter und/oder überprüfter Wert der Richtung 46a von Feldlinien des magnetischen Feldes 28a und/oder einer damit verbundenen Stromrichtung 76a mit dem vorgegebenen Wert verglichen. Insbesondere falls der ermittelte und/oder überprüfte Wert von dem vorgegebenen Wert abweicht, wird vorzugsweise in einem weiteren Verfahrensschritt des Verfahrens 100a, welcher insbesondere in Figur 3 nicht gezeigt ist, mittels der Steuer- und/oder Regeleinheit 26a, insbesondere nach der positiv bewerteten Überprüfung der erfassten Information, die Stromrichtung 76a des Stroms durch das Perimeterkabel 12a derart angepasst, dass diese dem vorgegebenen Wert entspricht und/oder dass eine Richtung 46a der Feldlinien des magnetischen Felds 28a innerhalb des Arbeitsbereichs 18a dem vorgegebenen Wert entspricht.

Alternativ ist denkbar, dass insbesondere falls die mittels der Interfaceeinheit 22a erfasste Information als eine Positionskenngröße der Arbeitsrobotervorrichtung 16a innerhalb des Arbeitsbereichs 18a ausgebildet ist, in einem Verfahrensschritt des Verfahrens 100a, vorzugsweise dem Verfahrensschritt 104a, mittels der Steuer- und/oder Regeleinheit 26a des Arbeitsrobotersystems 10a in Abhängigkeit von der, mittels der Initialabfrage über die Interfaceeinheit 22a erfassten Information eine Anordnung des Arbeitsbereichs 18a relativ zu der Basisstation 14a ermittelt wird, wobei insbesondere eine von der Basisstation 14a zu der im Arbeitsbereich 18a angeordneten Arbeitsrobotervorrichtung 16a ausgerichtete Richtung ermittelt wird. Zusätzlich und/oder alternativ ist denkbar, dass, falls die mittels der Interfaceeinheit 22a erfasste Information als eine Positionskenngröße der Arbeitsrobotervorrichtung 16a innerhalb des Arbeitsbereichs 18a ausgebildet ist, in einem Verfahrensschritt des Verfahrens 100a, insbesondere dem Verfahrensschritt 106a, mittels der Steuer- und/oder Regeleinheit 26a in Abhängigkeit von der ermittelten Anordnung des Arbeitsbereichs 18a relativ zu der Basisstation 14a eine Richtung 46a von Feldlinien des über die Basisstation 14a und/oder des Perimeterkabels 12a erzeugten magnetischen Felds 28a innerhalb des Arbeitsbereichs 18a ermittelt wird, welche insbesondere einer, mittels des an der Arbeitsrobotervorrichtung 16a angeordneten Sensorelements 62a der Sensoreinheit 44a des Arbeitsrobotersystems 10a erfassten Richtung 46a von Feldlinien des magnetischen Felds 28a an einer Position der Arbeitsrobotervorrichtung 16a entspricht. Besonders bevorzugt kann mittels des Verfahrens 100a eine Einrichtung des Arbeitsrobotersystems 10a unabhängig von einer Verbindungsart und/oder einer Verbindungsrichtung des Perimeterkabels 12a mit der Basisstation 14a erfolgen.

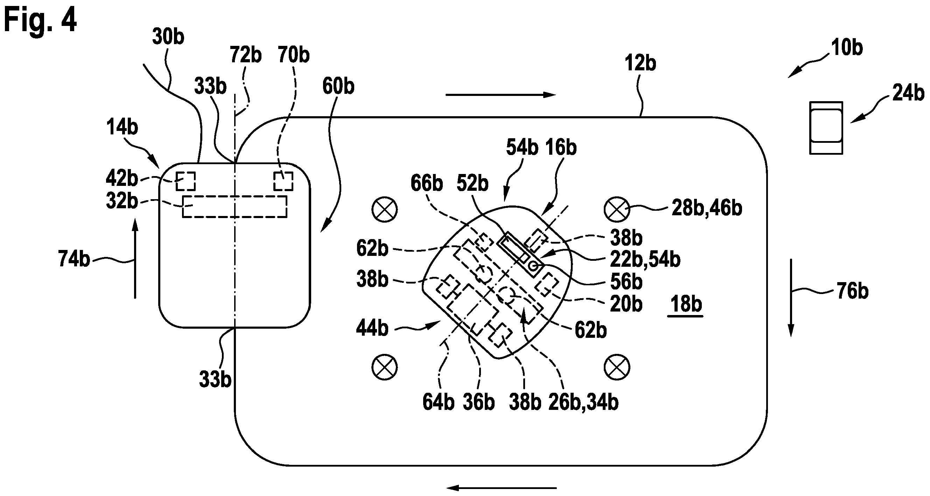

In Figur 4 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

In Figur 4 ist eine alternative Ausgestaltung eines als Mährobotersystem ausgebildeten Arbeitsrobotersystems 10b in einem montierten Zustand gezeigt. Das Arbeitsrobotersystem 10b umfasst eine mobile als Mähroboter ausgebildete Arbeitsrobotervorrichtung 16b zu einer Bearbeitung eines Arbeitsbereichs 18b, eine Basisstation 14b zu einem Laden der Arbeitsrobotervorrichtung 16b, ein Perimeterkabel 12b, welches zusammen mit der Basisstation 14b den Arbeitsbereich 18b begrenzt. Das Perimeterkabel 12b ist dazu vorgesehen, insbesondere unabhängig von einer Anordnung des Perimeterkabels 12b und/oder des Arbeitsbereichs 18b relativ zur Basisstation 14b, zumindest elektrisch mit der Basisstation 14b verbunden zu werden. Das Arbeitsrobotersystem 10b umfasst eine Steuer-und/oder Regeleinheit 26b. Das in der Figur 4 dargestellte Arbeitsrobotersystem 10b weist eine zumindest im Wesentlichen analoge Ausgestaltung zu dem in der Beschreibung der Figuren 1 bis 3 beschriebenen Arbeitsrobotersystem 10a auf, so dass bezüglich einer Ausgestaltung des in der Figur 4 dargestellten Arbeitsrobotersystems 10b zumindest im Wesentlichen auf die Beschreibung der Figuren 1 bis 3 verwiesen werden kann. Im Unterschied zu dem in der Beschreibung der Figuren 1 bis 3 beschriebenen Arbeitsrobotersystem 10a weist das in der Figur 4 dargestellte Arbeitsrobotersystem 10b vorzugsweise eine Interfaceeinheit 22b auf, die als Teil der Arbeitsrobotervorrichtung 16b ausgebildet ist und insbesondere zu einer Benutzerinteraktion vorgesehen ist. Die Interfaceeinheit 22b umfasst ein Display 52b und ein Betätigungselement 56b. Das Display 52b und das Betätigungselement 56b sind an einer Außenwand eines Gehäuses der Arbeitsrobotervorrichtung 16b angeordnet, welche insbesondere an einer Oberseite der Arbeitsrobotervorrichtung 16b angeordnet ist. Es sind aber auch andere Ausgestaltungen der Arbeitsrobotervorrichtung 16b, insbesondere der Interfaceeinheit 22b, denkbar. Die Steuer- und/oder Regeleinheit 26b ist dazu eingerichtet, in zumindest einem Betriebszustand, insbesondere bei einer Inbetriebnahme der Arbeitsrobotervorrichtung 16b, in Abhängigkeit von zumindest einer mittels einer Initialabfrage über die Interfaceeinheit 22b erfassten Information eine Anordnung des Arbeitsbereichs 18b relativ zu der Basisstation 14b zu ermitteln. Die mittels der Initialabfrage über die Interfaceeinheit 22b erfasste Information ist als eine Positionskenngröße der Arbeitsrobotervorrichtung 16b innerhalb des Arbeitsbereichs 18b ausgebildet. Insbesondere ist die Interfaceeinheit 22b, insbesondere die Initialabfrage, dazu vorgesehen, eine Anordnung der Arbeitsrobotervorrichtung 16b innerhalb des Arbeitsbereichs 18b zu bestätigen, wobei die als Positionskenngröße ausgebildete Information vorzugsweise als eine Betätigung des Betätigungselements 56b ausgebildet ist, wenn die Arbeitsrobotervorrichtung 16b im Arbeitsbereich 18b angeordnet ist. Bevorzugt ist die Steuer- und/oder Regeleinheit 26b dazu vorgesehen, insbesondere bei der Initialabfrage, mittels der Interfaceeinheit 22b, insbesondere dem Display 52b, den Benutzer dazu aufzufordern, die Arbeitsrobotervorrichtung 16b innerhalb des Arbeitsbereichs 18b anzuordnen und/oder eine Anordnung der Arbeitsrobotervorrichtung 16b im Arbeitsbereich 18b zu bestätigen. Die Steuer- und/oder Regeleinheit 26b umfasst eine Kontrolleinheit 34b zu einer teilautonomen Steuerung der Arbeitsrobotervorrichtung 16b, wobei die Kontrolleinheit 34b an der Arbeitsrobotervorrichtung 16b, insbesondere innerhalb eines Gehäuses der Arbeitsrobotervorrichtung 16b, angeordnet ist. Es sind aber auch andere Ausgestaltungen der Steuer- und/oder Regeleinheit 26b denkbar. Das Arbeitsrobotersystem 10b umfasst eine Sensoreinheit 44b, die ein Annäherungssensorelement 70b umfasst, wobei das Annäherungssensorelement 70b an der Basisstation 14b angeordnet ist und dazu vorgesehen ist, die Arbeitsrobotervorrichtung 10b in einem Nahbereich der Basisstation 14b zu erfassen. Es ist denkbar, dass die Steuer- und/oder Regeleinheit 26b dazu eingerichtet ist, über die Interfaceeinheit 22b die Initialabfrage zu starten, falls mittels des Annäherungssensorelement 70b eine Abwesenheit der Arbeitsrobotervorrichtung 10b erfasst wird.

## Patentansprüche

1. Arbeitsrobotersystem, insbesondere Mährobotersystem, mit zumindest einer mobilen Arbeitsrobotervorrichtung (16a; 16b), insbesondere einem Mähroboter, zu einer Bearbeitung eines Arbeitsbereichs (18a; 18b), und mit zumindest einer Basisstation (14a; 14b) zu einem Laden der Arbeitsrobotervorrichtung (16a; 16b), wobei die Arbeitsrobotervorrichtung (16a; 16b) und/oder die Basisstation (14a; 14b) zumindest eine Interfaceeinheit (22a; 22b) umfassen/umfasst, wobei insbesondere die Basisstation (14a; 14b) und ein Perimeterkabel (12a; 12b) des Arbeitsrobotersystems (10a; 10b) dazu vorgesehen sind, den Arbeitsbereich (18a; 18b) zu begrenzen und wobei insbesondere das Perimeterkabel (12a; 12b) dazu vorgesehen ist, insbesondere unabhängig von einer Anordnung des Perimeterkabels (12a; 12b) und/oder des Arbeitsbereichs (18a; 18b) relativ zur Basisstation (14a; 14b), zumindest elektrisch mit der Basisstation (14a; 14b) verbunden zu werden, **gekennzeichnet durch** zumindest eine Steuer- und/oder Regeleinheit (26a; 26b), welche dazu eingerichtet ist, in zumindest einem Betriebszustand, insbesondere bei einer Inbetriebnahme der Arbeitsrobotervorrichtung (16a; 16b), in Abhängigkeit von zumindest einer mittels einer Initialabfrage über die Interfaceeinheit (22a; 22b) erfassten Information eine Anordnung des Arbeitsbereichs (18a; 18b) relativ zu der Basisstation (14a; 14b) zu ermitteln.

2. Arbeitsrobotersystem nach Anspruch 1, **dadurch gekennzeichnet, dass** die mittels der Initialabfrage über die Interfaceeinheit (22a; 22b) erfasste Information als eine Richtungskenngröße der Basisstation (14a; 14b) relativ zu dem an die Basisstation (14a; 14b) grenzenden Arbeitsbereich (18a; 18b) ausgebildet ist.

3. Arbeitsrobotersystem nach Anspruch 1, **dadurch gekennzeichnet, dass** die mittels der Initialabfrage über die Interfaceeinheit (22a; 22b) erfasste Information als eine Positionskenngröße der Arbeitsrobotervorrichtung (16a; 16b) innerhalb des Arbeitsbereichs (18a; 18b) ausgebildet ist.

4. Verfahren zu einem Einrichten eines, insbesondere teilautonomen, Arbeitsrobotersystems (10a; 10b) nach einem der vorhergehenden Ansprüche, **dadurch gekennzeichnet, dass** in zumindest einem Verfahrensschritt (102a; 102b), insbesondere bei einer Inbetriebnahme der Arbeitsrobotervorrichtung (16a; 16b), mittels zumindest einer Interfaceeinheit (22a; 22b) des Arbeitsrobotersystems (10a; 10b) eine Initialabfrage von zumindest einer Information hinsichtlich einer Anordnung des Arbeitsbereichs (18a; 18b) relativ zu einer Basisstation (14a; 14b) des Arbeitsrobotersystems (10a; 10b) erfolgt, wobei in zumindest einem weiteren Verfahrensschritt (104a; 104b) mittels zumindest einer Steuer- und/oder Regeleinheit (26a; 26b) des Arbeitsrobotersystems (10a; 10b) in Abhängigkeit von der, mittels der Initialabfrage über die Interfaceeinheit (22a; 22b) erfassten Information eine Anordnung des Arbeitsbereichs (18a; 18b) relativ zu der Basisstation (14a; 14b) ermittelt wird.

5. Verfahren nach Anspruch 4, **dadurch gekennzeichnet, dass** in zumindest einem Verfahrensschritt (106a; 106b) mittels der Steuer- und/oder Regeleinheit (26a; 26b) in Abhängigkeit von der ermittelten Anordnung des Arbeitsbereichs (18a; 18b) relativ zu der Basisstation (14a; 14b) eine Richtung (46a; 46b) von Feldlinien eines über die Basisstation (14a; 14b) erzeugten magnetischen Felds (28a; 28b) innerhalb des Arbeitsbereichs (18a; 18b) ermittelt wird.

6. Verfahren nach Anspruch 4 oder 5, **dadurch gekennzeichnet, dass** in zumindest einem Verfahrensschritt (108a; 108b) ein Nahbereich eines Perimeterkabels (12a; 12b) des Arbeitsrobotersystems (10a; 10b) mittels der Arbeitsrobotervorrichtung (16a; 16b) abgefahren wird, wobei über eine Messung eines über die Basisstation (14a; 14b) generierten magnetischen Felds (28a; 28b) und/oder einer zurückgelegten Strecke der Arbeitsrobotervorrichtung (16a; 16b) mittels der Steuer- und/oder Regeleinheit (26a; 26b) die mittels der Initialabfrage über die Interfaceeinheit (22a; 22b) erfasste Information überprüft wird.

7. Verfahren nach Anspruch 6, **dadurch gekennzeichnet, dass** in zumindest einem Verfahrensschritt (110a; 110b), falls eine Überprüfung der mittels der Initialabfrage über die Interfaceeinheit (22a; 22b) erfassten Information negativ bewertet wurde, mittels der Interfaceeinheit (22a; 22b), insbesondere zu einer Fortsetzung des Einrichtens des Arbeitsrobotersystems (10a; 10b), eine Eingabe- und/oder Tätigkeitsaufforderung an einen Benutzer und/oder eine externe Einheit (24a; 24b) ausgegeben wird.

8. Verfahren nach einem der Ansprüche 4 bis 7, **dadurch gekennzeichnet, dass** in zumindest einem Verfahrensschritt (112a; 112b) mittels der Steuer-und/oder Regeleinheit (26a; 26b) zumindest ein Anordnungsparameter des Arbeitsbereichs (18a; 18b), insbesondere eine erfasste und/oder überprüfte Anordnung des Arbeitsbereichs (18a; 18b) relativ zu der Basisstation (14a; 14b), und/oder eine ermittelte Richtung (46a; 46b) von Feldlinien eines über die Basisstation (14a; 14b) im Arbeitsbereich (18a; 18b) erzeugten magnetischen Felds (28a; 28b) in zumindest einer Speichereinheit (50a; 50b) des Arbeitsrobotersystems (10a; 10b) zumindest im Wesentlichen fehlerfrei wiederabrufbar hinterlegt wird.

9. Arbeitsrobotervorrichtung, insbesondere Mähroboter, eines Arbeitsrobotersystems (10a; 10b) nach einem der Ansprüche 1 bis 3.

10. Basisstation eines Arbeitsrobotersystems (10a; 10b) nach einem der Ansprüche 1 bis 3.
